# EUROPÄISCHE PATENTSCHRIFT

(11) **EP 4 370 965 B1**
(45) Veröffentlichungstag und Bekanntmachung des Hinweises auf die Patenterteilung: **03.09.2025**
(21) Anmeldenummer: 22740868.9
(22) Anmeldetag: 06.07.2022
(51) Int. Cl.: G02B 27/09, G02B 27/28

(54) **VORRICHTUNG ZUR STRAHLFORMUNG EINES EINFALLENDEN LASERSTRAHLS**
DEVICE FOR SHAPING AN INCIDENT LASER BEAM
DISPOSITIF POUR FORMER UN FAISCEAU LASER INCIDENT

(30) Priorität: 13.07.2021 DE 102021118034
(43) Veröffentlichungstag der Anmeldung: 22.05.2024
(73) Patentinhaber: TRUMPF Laser SE, 78713 Schramberg (DE); Trumpf Photonics, Inc., Cranbury, NJ 08512 (US)
(72) Erfinder: RATAJ, Thomas, 12487 Berlin (DE); IRMLER, Lukas, 78467 Konstanz (DE); KILLI, Alexander, 78647 Trossingen (DE); RIED, Steffen, 78628 Rottweil (DE); WIESCHENDORF, Christoph, 78050 Villingen-Schwenningen (DE)
(74) Vertreter: Trumpf Patentabteilung
(86) Internationale Anmeldenummer: PCT/EP2022/068787
(87) Internationale Veröffentlichungsnummer: WO 2023/285250

(56) Entgegenhaltungen:
- WO-A2-2008/156598
- US-B2- 7 529 021

## Beschreibung

### Technisches Gebiet

Die vorliegende Erfindung betrifft eine Vorrichtung zur Strahlformung eines Laserstrahls, umfassend ein Prisma, einen Polarisationsdreher und einen Dünnschichtpolarisator.

### Stand der Technik

Für Laseranwendungen ist es häufig gewünscht, die Erzeugung des Laserstrahls von dessen eigentlicher Anwendung räumlich zu entkoppeln. Die räumliche Einkopplung kann aus Sicherheitsgründen gewünscht sein, oder weil im Bereich der Anwendung des Lasers, beispielsweise bei der Materialbearbeitung, Umgebungsbedingungen herrschen, die sich auf die Lebensdauer der Laserquelle auswirken können. Weiterhin ist es möglich, dass eine einzige Laserquelle zur Versorgung mehrerer Bearbeitungsstationen vorgesehen ist.

Eine solche Entkopplung und Führung des Laserstrahls ist mittels optischer Fasern möglich, wobei ein Laserstrahl in eine flexible optische Faser eingekoppelt werden kann und diese dann beispielsweise platzsparend in einem Kabelkanal zum eigentlichen Anwendungsort verlegt werden kann. Dies gilt insbesondere für Hochleistungslaser wie Diodendirektlaser oder Breitstreifenemitter eines Diodenlasers, da die dort auftretenden Laserleistungen aus Sicherheitsgründen nicht in einem Freistrahl durch die Luft geleitet werden können. Solche Laserarten weisen jedoch aufgrund ihres Erzeugungsprinzips sehr unsymmetrische Strahlquerschnitte auf. Insbesondere sind sie entlang einer ersten Strahlquerschnittachse oft deutlich breiter ausgeprägt, als entlang der jeweils anderen Strahlquerschnittachse. Um einen solchen verbreiterten Laserstrahl in eine optische Faser einzukoppeln, ist es daher nötig, den Laserstrahl so verlustfrei wie möglich in seinem Strahlquerschnitt zu komprimieren, so dass anschließend mit einer Justageoptik der resultierende Laserstrahl in eine optische Faser eingekoppelt werden kann. Auch sind bestimmte Anwendungen auf die Bereitstellung eines im Wesentlichen rotationssymmetrischen Strahlquerschnitts angewiesen.

In der WO2008/156598A2 ist eine Vorrichtung zur Erhöhung der Laserintensität und zur Strahlformung gezeigt. Hierbei wird der Laserstrahl in zwei Teilstrahlen aufgespaltet, wobei der erste Strahl einen Polarisationsdreher durchläuft und anschließend mit dem zweiten Teilstrahl so in einem Strahlteiler überlagert wird, dass der Strahlquerschnitt des austretenden Laserstrahls kleiner ist. Auch die DE10113019A1 offenbart eine solche Strahlformungsvorrichtung bei dem die Strahlüberlagerung mittels eines polarisierenden Strahlteilerwürfels erfolgt.

Ein Nachteil dieser Vorrichtungen ist deren mechanische Stabilität, die insbesondere bei hohen Laserleistungen Voraussetzung für einen sicheren Betrieb ist. So kann der Klebstoff, der die Prismen in Strahlteilerwürfeln zusammenhält unter hoher Laserleistung aufschmelzen. Zudem reduzieren die beschichteten Flächen im Strahlengang die Effizienz des Systems.

### Darstellung der Erfindung

Ausgehend von dem bekannten Stand der Technik ist es daher eine Aufgabe der vorliegenden Erfindung, eine verbesserte Vorrichtung zum Strahlformung bereitzustellen.

Diese Aufgabe wird durch eine Vorrichtung zur Strahlformung eines einfallenden Laserstrahls mit den Merkmalen des Anspruchs 1 gelöst. Vorteilhafte Weiterbildungen ergeben sich aus den Unteransprüchen, den beigefügten Figuren und der vorliegenden Beschreibung.

Entsprechend wird eine Vorrichtung zur Strahlformung eines Laserstrahls vorgeschlagen, welche ein Prisma, einen Polarisationsdreher und einen Dünnschichtpolarisator umfasst. Dabei ist das Prisma so angeordnet, dass es einen einfallenden Laserstrahl in eine erste Strahlhälfte und eine zweite Strahlhälfte aufteilt, wobei zumindest die erste Strahlhälfte in das Prisma eingekoppelt wird. Weiterhin tritt die erste Strahlhälfte an einer ersten Einfallseite in das Prisma ein, wobei das Prisma so ausgebildet ist, dass die erste Einfallseite unter dem Brewster-Winkel gegenüber dem einfallenden Laserstrahl angeordnet ist, und wobei das Prisma so ausgebildet ist, dass die in das Prisma eingekoppelte erste Strahlhälfte an einer Austrittsseite des Prismas wieder aus dem Prisma ausgekoppelt wird, wobei die erste Strahlhälfte unter dem Brewster-Winkel aus dem Prisma ausgekoppelt wird, wobei der Dünnschichtpolarisator so angeordnet ist, dass er von der aus dem Prisma ausgekoppelten ersten Strahlhälfte durchlaufen wird. Dabei ist der Polarisationsdreher so angeordnet, dass er von der zweiten Strahlhälfte durchlaufen wird und die Polarisation der zweiten Strahlhälfte dreht, wobei die zweite Strahlhälfte so geführt ist, dass sie von dem Dünnschichtpolarisator reflektiert wird und der Dünnschichtpolarisator die erste Strahlhälfte und die zweite Strahlhälfte überlagert.

Unter Strahlformung wird hier unter anderem verstanden, dass der Strahlquerschnitt des Laserstrahls verändert wird. Der Strahlquerschnitt ist dabei die Fläche, die der Laserstrahl senkrecht zu seiner Ausbreitungsrichtung einnimmt. Insbesondere wird Strahlformung hier so verstanden, dass der Strahlquerschnitt verkleinert wird, insbesondere halbiert wird, beziehungsweise das Seitenverhältnis des Strahlquerschnitts angepasst wird. Ist der Strahlquerschnitt in einer Achse größer als in der anderen, dann kann beispielsweise durch eine Reduktion der Länge der langen Achse eine Verkleinerung des Strahlquerschnitts erreicht werden.

Der einfallende Laserstrahl kann beispielsweise von einem Breitstreifenemitter eines Diodenlasers stammen. Ein solcher Emitter hat typischerweise in einer Achse (langsame Achse) eine deutlich schlechtere Strahlqualität, als in der anderen Achse (schnelle Achse). Insbesondere bedeutet eine schlechtere Strahlqualität eines in beiden Achsen kollimierten Breitstreifenemitters, dass der Strahlquerschnitt entlang der langsamen Achse deutlich größer ist, als entlang der schnellen Achse.

Der einfallende Laserstrahl kann aber auch von einem Diodendirektlaser stammen, der die Strahlung mehrerer Barren durch Wellenlängen-Multiplexing zu einem Strahlbündel vereinigen. Jeder Barren besteht dabei aus mehreren Einzelemittern. Die geometrische Form der Einzelemitter auf den Barren sowie die Anordnung der Barren, definieren hierbei unter anderem den Strahlquerschnitt des Diodendirektlasers, der insbesondere entlang einer Achse deutlich länger als entlang einer anderen Achse sein kann.

Unabhängig von der Ausführungsform des Lasers wird der einfallende Laserstrahl bevorzugt p-polarisiert bereitgestellt. Dies kann entweder dadurch erreicht werden, dass der einfallende Laserstrahl aufgrund seiner Erzeugung bereits p-polarisiert ist, oder aber der einfallende Laserstrahl wird durch geeignete Mittel in einen p-polarisierten Zustand überführt.

Das verwendete Prisma ist ein dreidimensionales optisches Bauelement, welches für den einfallenden Laserstrahl transparent ist und welches eine geometrische Form aufweist. Das Prisma besteht vorzugsweiseaus Glas, etwa Quarzglas oder Borosilikat Es kann aber auch aus diversen optischen Krystilen, etwa Quarz oder Saphir gefertigt werden Das Material des Prismas weist einen wellenlängenabhängigen Brechungsindex auf, der sich von dem das Prisma umgebenen Medium signifikant unterscheidet. Das umgebende Medium kann beispielsweise Luft oder ein Vakuum sein. Hierdurch werden insbesondere Reflexion und Transmission bestimmt, wenn Licht vom umgebenden Medium in das Prisma übergeht, sowie wenn Licht vom Prisma in das umgebende Medium übergeht. Insbesondere wird durch die Brechungsindizes des Prismas (n₂) und des umgebenden Mediums (n₁) der Brewster-Winkel gemäß: B=arctan(n₂/n₁) definiert. Des Weiteren lassen sich aus dem Snelliusschen Brechungsgesetz der Winkel B'=arcsin(n₁·sin(B)/n₂) des gebrochenen Strahls im Inneren des Prismas, sowie ein minimaler Winkel B">arcsin(n₂/n₁) bei dem die Totalreflexion an Grenzflächen im Inneren des Prismas stattfindet, ableiten.

Das Prisma weist verschiedene ebene Flächen auf, die jeweils in Winkeln zueinander angeordnet sind. Die Winkel, unter denen die Seiten des Prismas zueinander angeordnet sind, lassen sich mit der Gleichung: 90°-B aus dem Brewster-Winkel ableiten. Ein zu der Prismenbasis paralleler Strahl trifft folglich unter dem Brewster-Winkel auf eine erste Einfallsseite auf und tritt ebenso unter dem Brewster-Winkel aus der Austrittsseite wieder aus.

Der einfallende Laserstrahl wird dabei so auf eine Kante des Prismas gerichtet, dass die Kante des Prismas den Strahlquerschnitt in eine erste Strahlhälfte und eine zweite Strahlhälfte teilt und beispielsweise den einfallenden Laserstrahl halbiert.

Zumindest die erste Strahlhälfte tritt dann in das Prisma ein. Treten beide Strahlhälften in das Prisma ein, dann ist die erste Strahlhälfte diejenige, welche in ihrem weiteren Strahlengang den Dünnschichtpolarisator durchläuft.

Die erste Einfallseite des Prismas ist die Seite des Prismas, durch welche die erste Strahlhälfte in das Prisma eintritt.

Eine Einfallsebene ist definiert als die Ebene, die das Lot der ersten Einfallseite mit dem einfallenden Laserstrahl einnimmt.

Die Polarisation des Laserstrahls ist gegeben durch die Richtung des elektrischen Feldes des Lichts des Laserstrahls. Eine p-Polarisation liegt entsprechend dann vor, wenn das elektrische Feld des Lichts in der Einfallsebene liegt. Eine s-Polarisation liegt dann vor, wenn das elektrische Feld des Lichts senkrecht zur Einfallsebene liegt.

Die erste Einfallseite des Prismas ist so ausgerichtet, dass die erste Strahlhälfte unter dem Brewster-Winkel auf die Einfallseite des Prismas auftrifft und damit dann im Wesentlichen verlustfrei in das Prisma eintritt.

Der Brewster-Winkel ist definiert als der Einfallswinkel des Lichts auf eine Prismenseite, unter der das s-polarisierte Licht beim Übergang vom umliegenden Medium vom Prisma reflektiert wird, aber das p-polarisierte Licht in das Prisma eindringen kann.

Der Brewster-Winkel bezieht sich außerdem immer auf die Flächennormale (das Lot) der Seite, auf welche die jeweilige Strahlhälfte trifft oder aus der die Strahlhälfte heraustritt. Der Brewster-Winkel kann analog definiert werden für einen Übergang von einem Prisma in das umgebende Medium.

Fällt beispielsweise p-polarisiertes Licht unter dem Brewster-Winkel auf eine Prismenseite, so wird es vollständig in das Prisma gebrochen. Insbesondere kann das bedeuten, dass in diesem Fall der Übergang des Lichts zwischen dem umliegenden Medium und dem Prisma nicht mit einem Verlust von Laserleistung einhergeht.

Fällt hingegen Gegensatz s-polarisiertes Licht unter dem Brewster-Winkel auf eine Prismenseite, so wird es teilweise in das Prisma transmittiert und teilweise reflektiert. Das s-polarisierte Licht kann somit nur unter einem Verlust von Laserleistung in das Prisma eingekoppelt werden.

Fällt beispielsweise unpolarisiertes Licht unter dem Brewster-Winkel auf eine Prismenseite, so wird nur das s-polarisierte Licht reflektiert, so dass der reflektierte Strahl linear s-polarisiert ist. Der transmittierte Strahl ist hingegen p-polarisiert. Somit ist es möglich, Licht gemäß seiner Polarisation aufzuspalten.

Insbesondere ist das einfallende Laserlicht bevorzugt bereits p-polarisiert, so dass es verlustfrei in das Prisma eintreten kann.

Die erste Strahlhälfte durchläuft das Prisma. Hierbei kann es zu mindestens einer Reflexion innerhalb des Prismas kommen. Insbesondere kann das Prisma so ausgestaltet sein, dass die erste Strahlhälfte im Prisma totalreflektiert wird und schließlich zur ersten Austrittsseite des Prismas gelangt.

Die erste Austrittsseite des Prismas kann hierbei so im Prisma angeordnet sein, dass es zu einem Parallelversatz der austretenden ersten Strahlhälfte zum einfallenden Laserstahl kommt.

Unter Parallelversatz wird hierbei verstanden, dass der austretende Laserstrahl gegenüber dem in das Prisma eintretenden Laserstrahl um einen Abstand verschoben ist. Die Ausbreitungsrichtungen des eintretenden und austretenden Laserstrahls sind dabei gleich. Insbesondere hat der Parallelversatz eines Laserstrahls keinen oder nur einen geringen Einfluss auf die Polarisation und den Energiegehalt des Laserstrahls.

Die ausgekoppelte erste Strahlhälfte wird anschließend durch einen Dünnschichtpolarisator geleitet.

Sogenannte Dünnschichtpolarisatoren (Thin Film Polarisator, TFP) sind optische Bauteile, die den Brewster-Winkel zur Aufspaltung der Polarisationen von Licht in p- und s-Polarisation nutzen. Ein Dünnschichtpolarisator kann beispielsweise als planparallele Platte aufgebaut sein, die in den Strahlengang eines Laserstrahls eingebracht wird. Fällt Licht unter dem Brewster-Winkel auf die planparallele Platte, so wird es gemäß dem obengenannten Prinzip in seine p-polarisierte und sein s-polarisierte Komponente aufgespaltet.

Insbesondere kann der Dünnschichtpolarisator mit einer optischen Beschichtung beschichtet werden. Dadurch kann erreicht werden, dass die Brewster-Bedingung unter einem Winkelbereich und nicht nur für exakt einen Winkel erfüllt ist. Eine solche Beschichtung können auch einzelne oder alle Oberflächen des Prismas aufweisen. Eine Prismenseite mit einer solchen optischen Beschichtung kann ebenfalls die Eigenschaften eines Dünnschichtpolarisators aufweisen, so dass eine solche präparierte Prismenseite ebenfalls als Dünnschichtpolarisator zu verstehen ist.

Insbesondere kann ein Dünnschichtpolarisator dazu genutzt werden, um p-polarisierte und s-polarisierte Komponenten zu überlagern. Hierzu kann p-polarisiertes Licht durch den TFP transmittiert werden, während das s-polarisierte Licht an der gegenüberliegenden Seite des TFPs reflektiert wird. Hierbei ist darauf zu achten, dass der Parallelversatz, der bei der Transmission des p-polarisierten Lichts im TFP auftritt, gegebenenfalls ausgeglichen werden muss.

Da das Licht der austretenden ersten Strahlhälfte p-polarisiert ist, kann es den Dünnschichtpolarisator verlustfrei passieren.

Die zweite Strahlhälfte durchläuft nach der Aufspaltung einen Polarisationsdreher.

Unter einem Polarisationsdreher wird ein optisches Bauelement verstanden, welches die Polarisation von Licht beim Durchgang durch den Polarisationsdreher um einen bestimmten Winkel drehen kann. Ein solcher Polarisationsdreher umfasst typischerweise einen doppelbrechenden Kristall passender Dicke und Ausrichtung. Jedoch können auch andere optische Materialien mit dieser Eigenschaft eingesetzt werden.

Im Folgenden wird außerdem angenommen, dass das in den Polarisationsdreher eintretende Licht beim Austritt seine Ausbreitungsrichtung beibehält. Sollte die Ausbreitungsrichtung des Lichts doch geändert werden, so kann mit einer geeigneten Kombination von Spiegeln und Linsen das ausgekoppelte Licht wieder parallel zum eintretenden Licht ausgerichtet werden.

Beispielsweise kann die Polarisation der zweiten Strahlhälfte um 45° gedreht werden, so dass die zweite Strahlhälfte teilweise p- und teilweise s-polarisiert ist.

Nachdem die zweite Strahlhälfte den Polarisationsdreher durchlaufen hat, wird sie vom Dünnschichtpolarisator reflektiert und somit mit der ersten Strahlhälfte überlagert.

Das kann beispielsweise bedeuten, dass die zweite Strahlhälfte eine teilweise s-Polarisation aufweist und unter einem beliebigen Winkel auf den Dünnschichtpolarisator auftritt, so dass sowohl das s-polarisierte Licht als auch das p-polarisierte Licht teilweise am Dünnschichtpolarisator reflektiert und teilweise durch den Dünnschichtpolarisator transmittiert wird. Insbesondere kann die zweite Strahlhälfte auch unter dem Brewster-Winkel am Dünnschichtpolarisator reflektiert werden, so dass nur das s-polarisierte Licht reflektiert und das p-polarisierte Licht transmittiert wird.

Die zweite Strahlhälfte fällt zudem unter einem solchen Winkel auf den Dünnschichtpolarisator, dass der reflektierte Strahl anschließend parallel zu dem transmittierten Strahl der p-polarisierten ersten Strahlhälfte ist.

Insbesondere kann die zweite Strahlhälfte so vom Dünnschichtpolarisator reflektiert werden, dass die erste und zweite Strahlhälfte sich überlagern.

Auf diese Weise werden die erste und die zweite Strahlhälfte überlagert, so dass der Strahlquerschnitt reduziert wird.

Mit anderen Worten wird der einfallende Laserstrahl in zwei Strahlhälften aufgeteilt und dann die beiden Strahlhälften überlagert, so dass der Strahlquerschnitt entsprechend reduziert wird.

Die erste Austrittsseite kann unter dem Brewster-Winkel zu der in das Prisma eingekoppelten, auf die erste Austrittsseite auftreffenden ersten Strahlhälfte stehen, wobei der Dünnschichtpolarisator so angeordnet ist, dass er von der aus dem Prisma ausgekoppelten ersten Strahlhälfte unter dem Brewster-Winkel durchlaufen wird.

Dies hat den Vorteil, dass die Transmission durch das Prisma und den Dünnschichtpolarisator besonders hoch ist.

Bevorzugt kann der Polarisationsdreher am Prisma angebracht sein und/oder eine λ/2 Platte sein. Auf diese Weise lässt sich ein kompakter Aufbau realisieren.

Das hat den Vorteil, dass der Bauraum der optischen Komponenten minimiert werden kann. Außerdem hat dadurch der ausgekoppelte Lichtstrahl die gleiche Ausrichtung wie der einfallende Lichtstrahl, so dass weitere optische Komponenten eingespart werden können.

Die Anbringung des Polarisationsdrehers am Prisma kann beispielsweise bedeuten, dass der Polarisationsdreher auf dem Prisma angeschraubt oder angeklebt ist. Es ist aber auch möglich, dass der Polarisationsdreher in einer Nut am Prisma eingebracht wird. Hierbei kann der Polarisationsdreher noch über die Prismenseite, in die er eingebracht ist hinausragen.

Das hat den Vorteil, dass Bauraum eingespart werden kann. Zudem ermöglicht dies eine mechanisch stabilere Verbindung der verschiedenen optischen Komponenten.

Bevorzugt ist der Polarisationsdreher so ausgebildet, dass die Polarisation der zweiten Strahlhälfte um 90° gedreht wird, bevorzugt in eine s-Polarisation gedreht wird.

Damit kann erreicht werden, dass die zweite Strahlhälfte vollständig am Dünnschichtpolarisator reflektiert werden kann, sofern sie unter dem Brewster-Winkel auf den Dünnschichtpolarisator trifft.

Bevorzugt kann das Prisma so ausgebildet sein, dass mindestens eine der Strahlhälften im Prisma totalreflektiert wird. Dies kann bedeuten, dass durch die durch die Totalreflektion der Strahlhälfte erzeugte Richtungsänderung die erste Strahlhälfte unter einem bevorzugten Winkel auf eine Austrittsfläche des Prismas trifft.

Dies kann auch bedeuten, dass durch die durch die Totalreflexion hervorgerufene Richtungsänderung die zweite Strahlhälfte unter einem bevorzugten Winkel auf die Prismenbasis des Prismas trifft. Die Prismenbasis ist dabei die Seitenfläche des Prismas, an der die zweite Strahlhälfte totalreflektiert wird.

Die Prismenbasis muss dabei nicht parallel zum einfallenden Laserstrahl verlaufen, sondern kann diesem gegenüber abgewinkelt sein. Dies kann insbesondere bedeuten, dass sich durch eine weitabgewinkelte Prismenbasis eine lange Strahllaufzeit im Prisma ergibt. Dies ist insbesondere so zu verstehen, dass bei einer abgewinkelten Prismenbasis die Länge des Prismas so gewählt sein muss, dass der Strahl nicht aus dem Prisma austritt, bevor eine Totalreflexion stattgefunden hat.

Das hat den Vorteil, dass die Richtungen der ersten und zweiten Strahlhälften im Prisma ohne Leistungsverlust verändert werden kann.

Bevorzugt ist mindestens ein Spiegel vorgesehen, welcher die zweite Strahlhälfte nach dem Durchtreten des Polarisationsdrehers auf den Dünnschichtpolarisator reflektiert.

Dabei kann der Strahlengang der zweiten Strahlhälfte mit mindestens einem Spiegel so auf den Dünnschichtpolarisator reflektiert werden, dass die vom Dünnschichtpolarisator reflektierte zweite Strahlhälfte mit der durch den Dünnschichtpolarisator transmittierten ersten Strahlhälfte überlappt.

Bevorzugt sind der oder die Spiegel und das Prisma auf einer gemeinsamen Grundplatte vormontiert. Damit kann die mechanische Stabilität der gesamten optischen Vorrichtung erhöht werden.

Bevorzugt ist das Prisma so angeordnet und ausgebildet, dass die zweite Strahlhälfte an einer zweiten Einfallseite in das Prisma eingekoppelt wird, wobei die zweite Einfallseite unter dem Brewster-Winkel gegenüber dem einfallenden Laserstrahl angeordnet ist.

Dadurch wird auch die zweite Strahlhälfte vollständig in das Prisma eingekoppelt. Außerdem werden die erste und die zweite Strahlhälfte auf verschiedene optische Pfade innerhalb des Prismas umgelenkt, so dass die weitere Strahlformung über die Geometrie des Prismas realisiert werden kann.

Dadurch kann auch der optische Justageaufwand reduziert werden und die mechanische Stabilität und Ausrichtung der beiden Teilstrahlen erhöht werden.

Dabei kann das Prisma weiterhin so ausgebildet sein, dass die zweite Strahlhälfte an einer zweiten Austrittsseite aus dem Prisma ausgekoppelt wird, wobei die zweite Austrittsseite so angeordnet ist, dass die zweite Strahlhälfte unter dem Brewster-Winkel auf die zweite Austrittsseite auftrifft.

Die zweite Austrittsseite ist hierbei diejenige Seitenfläche des Prismas, aus der die zweite Strahlhälfte ausgekoppelt wird. Damit kann eine p-polarisierte zweite Strahlhälfte komplett aus dem Prisma ausgekoppelt werden.

Die zweite Austrittsfläche des Prismas kann hierbei unter einem Winkel X an der Prismenbasis angebracht sein. Der Winkel X variiert mit dem Winkel der Prismenbasis zum einfallenden Laserstrahl, sowie mit dem Winkel der Totalreflexion. Damit geht keine Energie für den überlagerten Strahl verloren.

Bevorzugt ist der Polarisationsdreher so angeordnet, dass die aus dem Prisma ausgekoppelte zweite Strahlhälfte den Polarisationsdreher durchläuft. Insbesondere kann hierbei der Polarisator direkt hinter der zweiten Austrittsseite angebracht sein. Damit kann die Effizienz der Reflektion am Dünnschichtpolarisator gesteuert werden.

Die zweite Strahlhälfte muss jedoch nicht in das Prisma eintreten, sondern kann auch an dem Prisma vorbei geleitet werden. Damit kann erreicht werden, dass zusätzliche optische Komponenten in den Strahlengang der zweite Strahlhälfte eingebracht werden können, um den Strahlengang und die Eigenschaften der zweiten Strahlhälfte einfacher optimieren zu können.

Bevorzugt kann ein Dünnschichtpolarisator auf der ersten Austrittsseite des Prismas durch eine geeignete optische Beschichtung realisiert werden.

Damit wird kein zusätzliches optisches Bauelement benötigt. Des Weiteren kann so die mechanische Stabilität des Aufbaus verbessert werden. Durch eine geeignete breitbandige Beschichtung ist es möglich, dass in einem bestimmten Winkelbereich jeder Winkel die Wirkung des Brewster-Winkels auf die erste und zweite Strahlhälfte hat.

Das Prisma kann ein Dove-Prisma ein. Unter einem Dove-Prisma wird ein Prisma mit einer trapezförmigen Grundfläche verstanden. Insbesondere können die Trapezseiten so angeordnet sein, dass die erste Strahlhälfte im Brewster-Winkel in das Prisma eintritt, dann an der Prismenbasis totalreflekiert wird und anschließend unter dem Brewster-Winkel auf die erste Austrittsseite trifft.

Damit ergibt sich eine einfache geometrische Form, die dazu ausreicht, die erste Strahlhälfte und die zweite Strahlhälfte auf verschiedene Strahlengänge zu versetzen und getrennt voneinander zu bearbeiten.

Die oben genannte Aufgabe wird ferner durch ein Verfahren zur Strahlformung eines Laserstrahls mit den Merkmalen des Anspruchs 14 gelöst. Vorteilhafte Weiterbildungen ergeben sich aus der vorliegenden Beschreibung und den Figuren.

Entsprechend wird ein Verfahren zur Strahlformung eines Laserstrahls mit einer Vorrichtung vorgeschlagen, wobei die Vorrichtung ein Prisma, einen Polarisationsdreher und einen Dünnschichtpolarisator umfasst. Dabei wird der einfallende Laserstrahl durch Auftreffen auf das Prisma in eine erste Strahlhälfte und eine zweite Strahlhälfte geteilt, wobei die erste Strahlhälfte unter dem Brewster-Winkel auf eine erste Einfallseite des Prismas trifft, dann in das Prisma eintritt, das Prisma durchläuft, und unter dem Brewster-Winkel auf eine erste Austrittsseite trifft und aus dem Prisma austritt, wobei die erste Strahlhälfte nach dem Durchlauf durch das Prisma einen Parallelversatz zum einfallenden Laserstrahl aufweist. Weiterhin durchläuft die erste Strahlhälfte nach dem Austritt aus dem Prisma einen Dünnschichtpolarisator und die zweite Strahlhälfte wird mit dem Polarisationsdreher in der Polarisation gedreht, wobei die zweite Strahlhälfte durch Brechung und/oder Reflexion in Richtung des Dünnschichtpolarisators abgelenkt wird. Weiterhin wird die zweite Strahlhälfte vom Dünnschichtpolarisator reflektiert und die erste Strahlhälfte und die zweite Strahlhälfte werden in Strahlrichtung nach dem Dünnschichtpolarisator deckungsgleich überlagert.

### Kurze Beschreibung der Figuren

Bevorzugte weitere Ausführungsformen der Erfindung werden durch die nachfolgende Beschreibung der Figuren näher erläutert. Dabei zeigen:
- Figur 1A: eine schematische Darstellung einer Vorrichtung zur Strahlformung gemäß einer ersten Ausführungsform sowie des Strahlenganges durch diese Vorrichtung;
- Figur 1B: eine schematische Darstellung des Prismas der ersten Ausführungsform;
- Figur 1C: eine schematische Darstellung des Strahlengangs der ersten Strahlhälfte durch das Prisma der ersten Ausführungsform;
- Figur 1D: eine schematische Darstellung des Strahlengangs der zweiten Strahlhälfte durch das Prisma der ersten Ausführungsform;
- Figur 1E: eine schematische Darstellung der Eintritts- und Austrittswinkel in Abhängigkeit von der Länge der Prismenbasis;
- Figur 2A: eine schematische Darstellung einer weiteren Vorrichtung zur Strahlformung sowie des Strahlenganges durch die Vorrichtung;
- Figur 2B: eine schematische Darstellung des Strahlengangs der ersten Strahlenhälfte durch das Prisma der weiteren Ausführungsform;
- Figur 2C: eine schematische Darstellung des Strahlengangs der zweiten Strahlenhälfte durch das Prisma der weiteren Ausführungsform;
- Figur 2D: eine schematische Darstellung der Geometrie des Prismas der weiteren Ausführungsform;
- Figur 3A: eine schematische Darstellung noch einer weiteren Vorrichtung zur Strahlformung sowie des Strahlengangs durch die Vorrichtung;
- Figur 3B: eine schematische Darstellung des Strahlengangs gemäß der noch weiteren Ausführungsform zur Darstellung der Prismenwinkel; und
- Figur 3C: eine schematische Darstellung des Strahlengangs gemäß der noch weiteren Ausführungsform zur Darstellung der Prismenwinkel.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

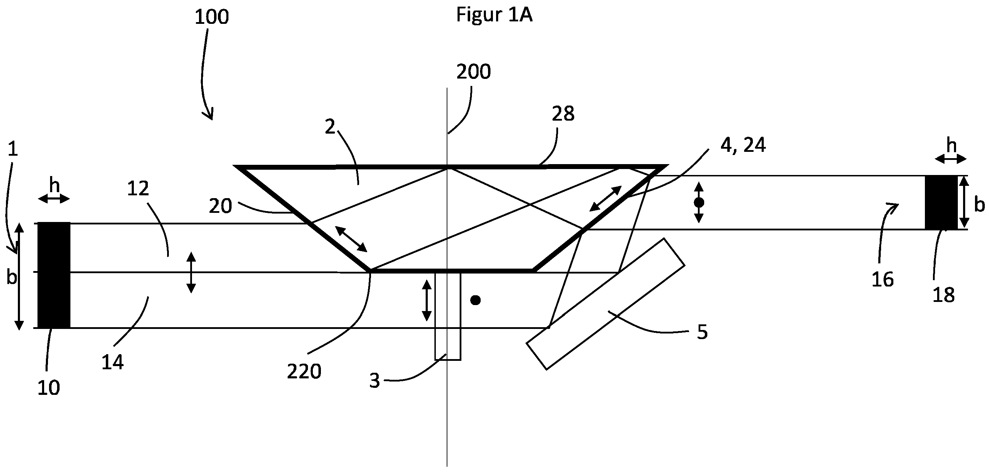

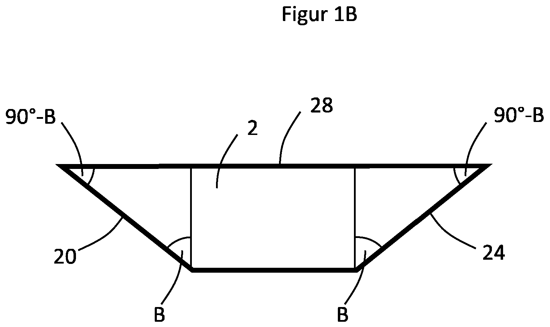

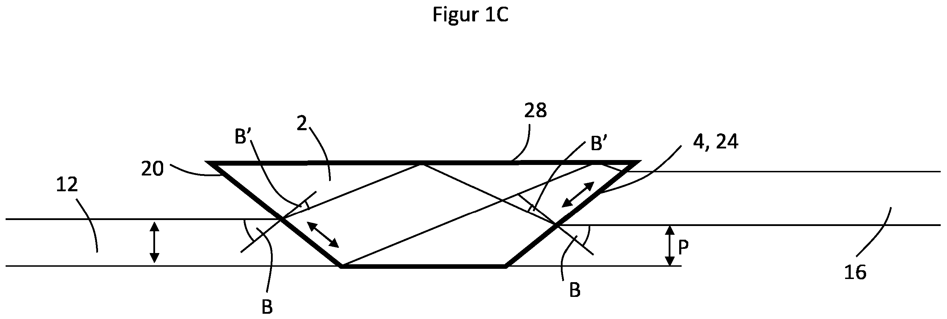

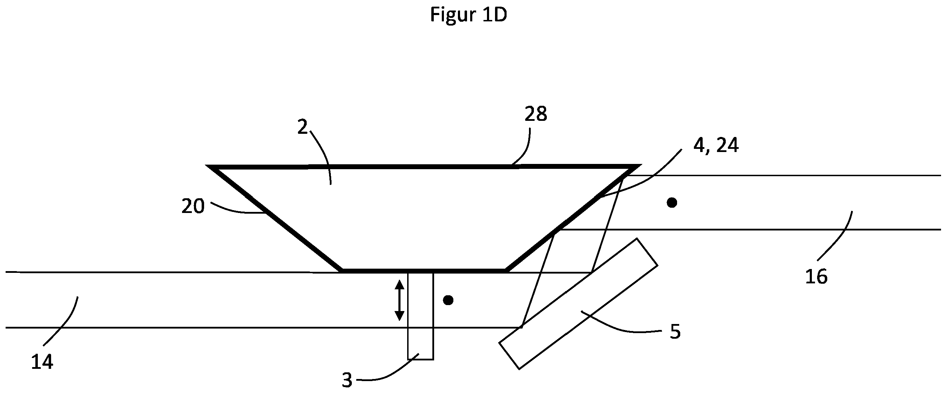

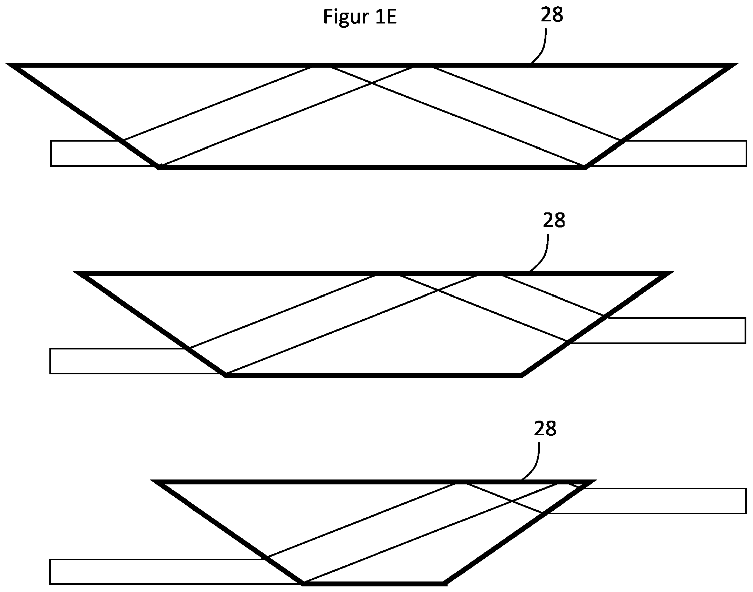

In Figur 1, umfassend die Figuren 1A, 1B, 1C, 1D, ist schematisch eine Ausführungsform einer Vorrichtung 100 zur Strahlformung eines schematisch angedeuteten Laserstrahls 1 gezeigt. Die Laserquelle ist hier nicht gezeigt, sondern der Laserstrahl 1 wird unabhängig von dessen Erzeugung betrachtet.

Der Laserstrahl 1 kann dabei beispielsweise mittels eines Diodendirektlasers oder eines Breitstreifenemitters bereitgestellt werden und weist ein nicht rotationssymmetrisches Profil auf. Insbesondere weist der Laserstrahl 1 aufgrund der Charakteristik seiner Quelle einen im Wesentlichen rechteckigen Strahlquerschnitt 10 auf, der eine größere Breite b aufweist, als seine Höhe h.

Dieser Strahlquerschnitt 10 des Laserstrahls 1 ist schematisch in der Figur 1A angedeutet, wobei die Breitenausdehnung b des Strahlquerschnitts 10 in der Papierebene liegt und die Höhenausdehnung h entsprechend senkrecht zur Papierebene steht.

Die Vorrichtung 100 zur Strahlformung umfasst in der gezeigten Ausführungsform ein Prisma 2, einen Polarisationsdreher 3, einen Dünnschichtpolarisator 4 und einen Spiegel 5.

Der Laserstrahl 1 wird hier p-polarisiert bezüglich der Grenzfläche des Prismas 2 bereitgestellt. Diese p-Polarisierung kann durch entsprechende optische Maßnahmen vor dem Eintritt in die Vorrichtung 100 zur Strahlformung erreicht werden, beispielsweise durch eine Bearbeitung der Laserstrahls mittels eines doppelbrechenden Kristalls oder einer λ/4 Platte.

In der gezeigten Ausführungsform wird ein Prisma 2 verwendet, welches bezüglich einer Mittelebene 200 im Wesentlichen spiegelsymmetrisch aufgebaut ist und im Prinzip wie ein Dove-Prisma aufgebaut ist. Dieses Prisma ist im Detail in Figur 1B gezeigt. Gegenüber einem herkömmlichen Dove-Prisma, bei dem die Seitenflächen üblicherweise unter einem Winkel von 45° angeordnet sind, sind die Seitenflächen des vorgeschlagenen Prismas 2 jedoch unter einem Winkel angeordnet, der bezüglich des einfallenden Laserstrahls 1 und bezüglich des austretenden Lichtstrahls jeweils dem Brewster-Winkel entspricht. Im gezeigten Ausführungsbeispiel entspricht das einem Winkel von 55,42°. Der Brechungsindex des Prismas ist wellenlängenabhängig, so dass auch der Brewster-Winkel für verschiedene Wellenlänge unterschiedlich ausfällt.

Das Prisma 2 ist entsprechend geometrisch so gestaltet, dass die Eintrittseite 20 mit der Prismenbasis 28 einen Winkel B, und die Austrittsseite 24 mit der Prismenbasis 28 einen Winkel B' einschließt. Der Winkel B der Eintrittsseite 20 entspricht dem Brewster-Winkel für den parallel zur Prismenbasis 28 einfallenden Laserstrahl 1. Der Winkel B' des gebrochenen Strahls auf der Austrittsseite 24 entspricht dem Winkel B' des aus dem Prisma 2 austretenden Laserstrahls. Typischerweise beträgt der Brechungsindex im Glas 1,45 (in Luft jedoch 1), so dass B und B' unterschiedlich sind. Durch Verlängerung der Prismenbasis 28 kann die Propagationsstrecke im Prisma und damit die Austrittsposition auf der Austrittsseite 24 verändert werden. Hierbei bleiben die Austrittswinkel jedoch erhalten, wie in Figur 1E gezeigt ist.

Der einfallende Laserstrahl 1 ist p-polarisiert, was durch die Doppelpfeile in der Blattebene gekennzeichnet ist. Der einfallende Laserstrahl 1 ist bezüglich des Prismas 2 so ausgerichtet, dass er auf eine Kante 220 des Prismas 2 so auftrifft, dass der einfallende Laserstrahl 1 in eine erste Strahlhälfte 12 und eine zweite Strahlhälfte 14 aufgespaltet wird. Beide Strahlhälften umfassen dadurch nur noch jeweils die Hälfte des Strahlquerschnitts 16 des einfallenden Laserstrahls 1. Im vorliegenden Beispiel wird der einfallende Laserstrahl 1 genau in der Hälfte geteilt.

Die erste Strahlhälfte 12 trifft unter dem Brewster-Winkel B auf die erste Prismenseite 20. Da die erste Strahlhälfte 12 eine p-Polarisation aufweist, wird sie ohne Energie- und Reflexionsverluste in das Prisma 2 eingekoppelt. Die erste Strahlhälfte 12 durchläuft das Prisma 2 und wird aufgrund der passend gewählten Geometrie des Prismas 2 an der Prismenbasis 28 totalreflektiert. So wird die Ausbreitungsrichtung der ersten Strahlhälfte 12 innerhalb des Prismas 2 ohne Energie- und Reflexionsverluste geändert.

Anschließend trifft die erste Strahlhälfte 12 unter dem Winkel B' auf die erste Austrittsseite 24. Dabei ist zu beachten, dass der Brewster-Winkel B beim Übergang vom umliegenden Medium in das Prisma 2 gilt, wohingegen der sich daraus ergebene Winkel B' des gebrochenen Strahls beim umgekehrten Übergang gilt.

Auf der Austrittsseite 24 ist eine optische Beschichtung aufgebracht, so dass diese Seite als Dünnschichtpolarisator 4 wirkt. Die p-polarisierte erste Strahlhälfte 12 kann den Dünnschichtpolarisator 4 ungehindert passieren, da dieser für diese Polarisation eine 100% Transmission ermöglicht. Die aus dem Prisma 2 ausgetretene erste Strahlhälfte 12 weist dabei einen Parallelversatz P zu der eintretenden ersten Strahlhälfte 12 auf.

Die zweite Strahlhälfte 14 wird in dem Ausführungsbeispiel an dem Prisma 2 vorbeigeführt und durchläuft einen Polarisationsdreher 3, der an das Prisma 2 anschließt. Der Polarisationsdreher 3 ist hier in Form einer λ/2-Platte vorgesehen, welche die Polarisation der zweiten Strahlhälfte 14 um 90° dreht. Somit ist die zweite Strahlhälfte 14 nach dem Durchgang durch den Polarisationsdreher 3 s-polarisiert, was durch den schwarzen Punkt gekennzeichnet ist.

Die s-polarisierte zweite Strahlhälfte 14 fällt auf einen Spiegel 5. Der Spiegel 5 ist von seiner Position und seinem Winkel her so eingestellt, dass die zweite Strahlhälfte 14 unter dem Brewster-Winkel B auf den Dünnfilmpolarisator 4 trifft, der auf der Austrittsseite 24 des Prismas 2 durch die optische Beschichtung realisiert ist. Der Dünnfilmpolarisator 4 weist für diese Polarisierung eine nahezu 100 prozentige Reflektion, beispielsweise eine über 90 prozentige Reflektion, auf, so dass die s-polarisierte zweite Strahlhälfte 14 entsprechend an dem auf der Austrittsseite 24 des Prismas 2 angeordneten Dünnfilmpolarisator 4 vollständig reflektiert wird.

Die Position und der Winkel des Spiegels 5 ist ferner so eingestellt, dass die dann am Dünnfilmpolarisator 4 reflektierte zweite Strahlhälfte 14 mit der ersten transmittierten Strahlhälfte 12 derart überlagert wird, dass beide Teilstrahlen 12, 14 zusammenfallen und entsprechend einen resultierenden Strahl 16 ausbilden.

Der resultierende Strahl 16 weist nun einen Strahlquerschnitt 18 auf, der nur noch im Wesentlichen die halbe Breite b' bezüglich des Strahlquerschnitts 10 des einfallenden Laserstrahls 1 aufweist.

Zudem umfasst der resultierende Laserstrahl 16 nun die p-polarisierten Anteile aus der ersten Strahlhälfte 12 und die s-polarisierten Anteile aus der zweiten Strahlhälfte 14.

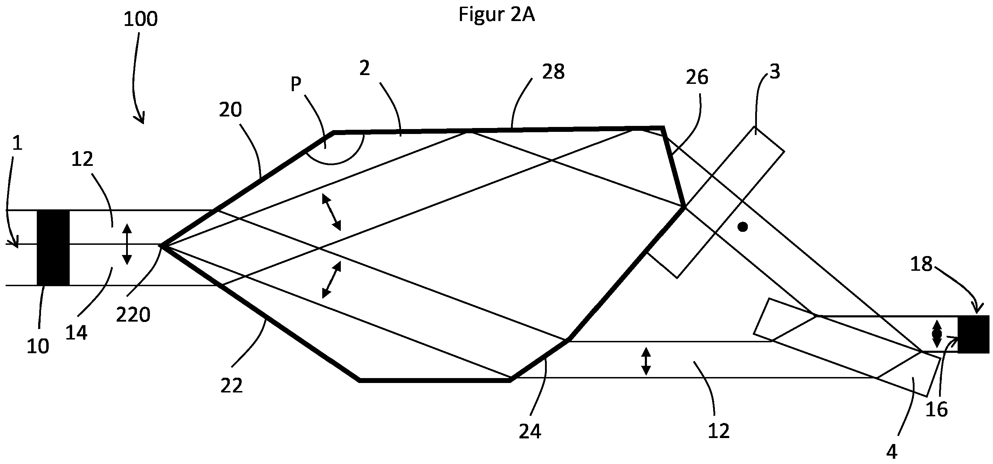

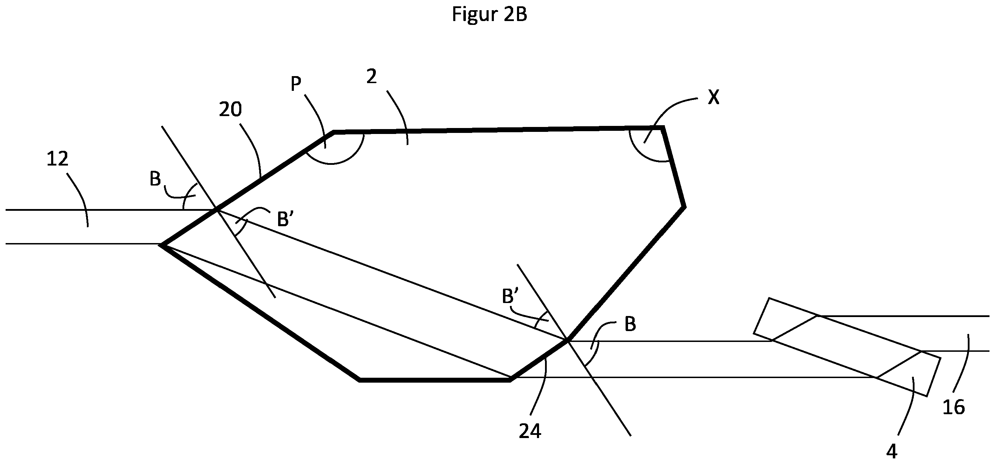

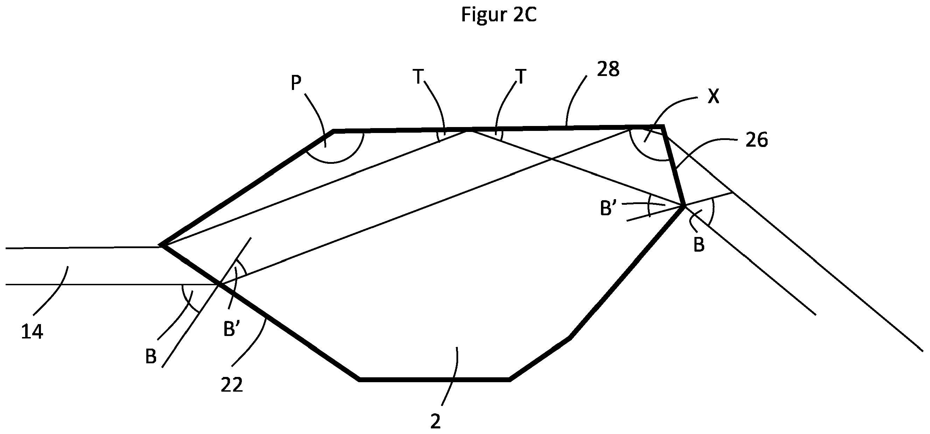

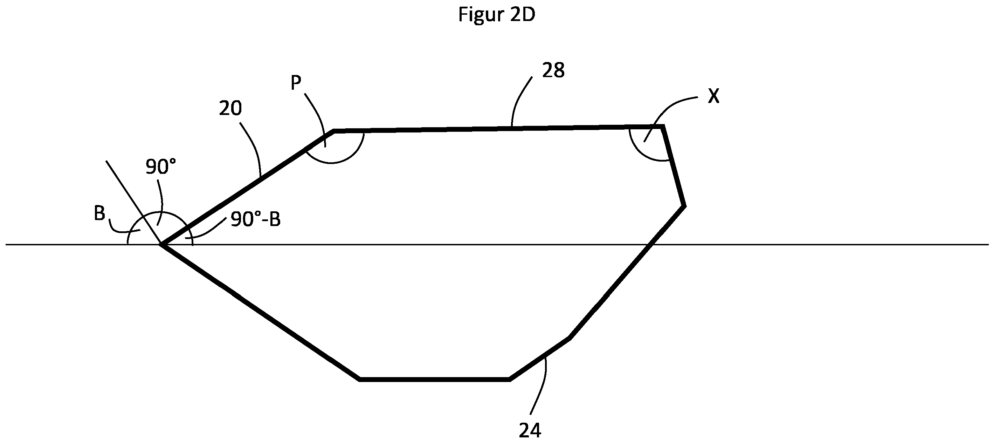

In Figur 2, umfassend die Figuren 2A, 2B, 2C und 2D, ist eine weitere Ausführungsform der Vorrichtung 100 zur Strahlformung gezeigt.

Der einfallende, p-polarisierte Laserstrahl 1 trifft auf eine Kante 220 des Prismas 2 und wird dort wiederum in eine erste Strahlhälfte 12 und eine zweite Strahlhälfte 14 aufgespaltet.

Das Prisma 2 ist dabei geometrisch so ausgebildet und der Laserstrahl 1 ist bezüglich des Prismas 2 so ausgerichtet, dass die erste Strahlhälfte 12 und die zweite Strahlhälfte 14 beide unter dem Brewster-Winkel B auf eine erste Einfallseite 20 bzw. auf eine zweite Einfallseite 22 des Prismas 2 treffen. Zudem ist der einfallende Laserstrahl 1 so ausgerichtet, dass die erste Strahlhälfte 12 und die zweite Strahlhälfte 14 im Wesentlichen den gleichen Strahlquerschnitt haben.

Da der einfallende Laserstrahl 1 bezüglich der Grenzflächen des Polarisators 2 p-polarisiert ist, kann er verlustfrei über die erste Einfallseite 20 und die zweite Einfallseite 22 in das Prisma 2 einkoppeln.

Die erste Strahlhälfte 12 wird dann innerhalb des Prismas in Richtung der ersten Austrittsseite 24 gebrochen und trifft dort unter dem Winkel B' auf die erste Austrittsseite 24 und tritt aus dem Prisma 2 wieder aus. Der Winkel B' gilt für die innerhalb des Prismas 2 verlaufende erste Strahlhälfte 12 an der ersten Austrittsseite 24.

Dies ist insbesondere so zu verstehen, dass in dieser Ausführungsform die erste Einfallsseite 20 und die erste Austrittsseite 24 parallel zueinander angeordnet sein können. Die aus dem Prisma 2 wieder ausgetretene erste Strahlhälfte 12 hat danach einen Parallelversatz zu der einfallenden ersten Strahlhälfte 12.

Anschließend durchläuft die ausgetretene erste Strahlhälfte 12 einen Dünnschichtpolarisator 4, wobei hier aufgrund der p-Polarisierung der ersten Strahlhälfte 12 eine 100% Transmission durch den Dünnschichtpolarisator 4 auftritt. Aufgrund der Dicke des Dünnschichtpolarisators 4 kann ein leichter Parallelversatz des aus dem Dünnschichtpolarisator 4 austretenden resultierenden Strahls 16 auftreten, welcher bevorzugt bereits in der Ausgestaltung des Prismas berücksichtigt wird.

Die zweite Strahlhälfte 14 wird innerhalb des Prismas 2 in Richtung der Prismenbasis 28 gebrochen, an welcher durch Totalreflexion die Ausbreitungsrichtung der zweiten Strahlhälfte 14 innerhalb des Prismas 2 geändert wird. In der vorliegenden Ausführungsform verläuft die Prismenbasis 28 parallel zum einfallenden Laserstrahl 1. Nach der Totalreflexion an der Prismenbasis 28 trifft die zweite Strahlhälfte 14 unter dem Winkel B' auf die zweite Austrittsseite 26 und tritt entsprechend im Brewsterwinkel aus dem Prisma 2 aus.

Anschließend durchläuft die ausgetretene zweite Strahlhälfte 14 eine λ/2 Platte 3, wo sie in der Polarisation gedreht wird, so dass die zweite Strahlhälfte nach der λ/2-Platte eine s-Polarisation aufweist.

Die Geometrie des Prismas 2 ist in diesem Beispiel so gewählt, dass die nun s-polarisierte zweite Strahlhälfte 14 dann unter dem Brewster-Winkel B auf den Dünnschichtpolarisator trifft und dort zu 100% reflektiert wird.

Insbesondere ist die Geometrie des Prismas 2 und die Anordnung des Dünnschichtpolarisators 4 so gewählt, dass die beiden Teilstrahlen 12, 14 zusammenfallen und entsprechend einen resultierenden Strahl 16 ausbilden.

Der resultierende Strahl 16 weist nun wieder einen Strahlquerschnitt 18 auf, der nur noch im Wesentlichen die halbe Breite b' bezüglich des Strahlquerschnitts 10 des einfallenden Laserstrahls 1 aufweist.

Zudem umfasst der resultierende Laserstrahl 16 nun die p-polarisierten Anteile aus der ersten Strahlhälfte 12 und die s-polarisierten Anteile aus der zweiten Strahlhälfte 14.

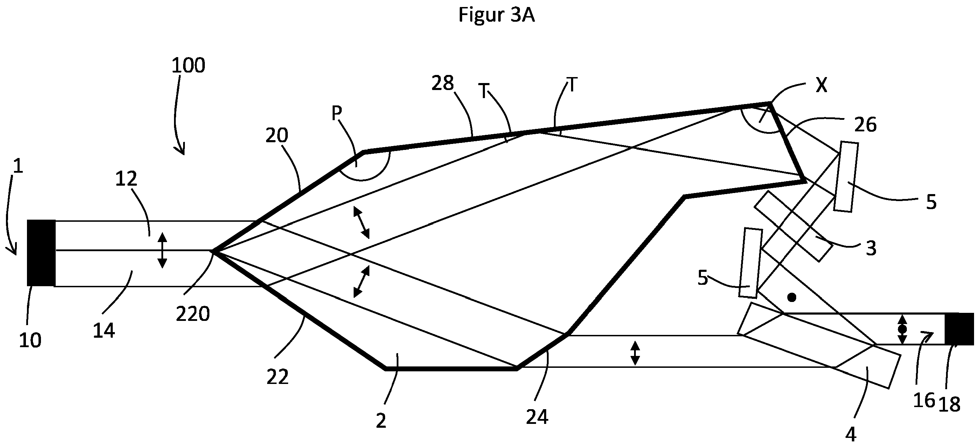

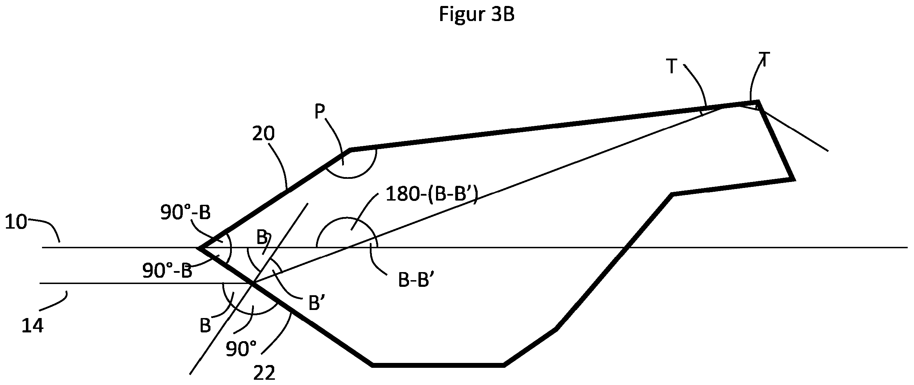

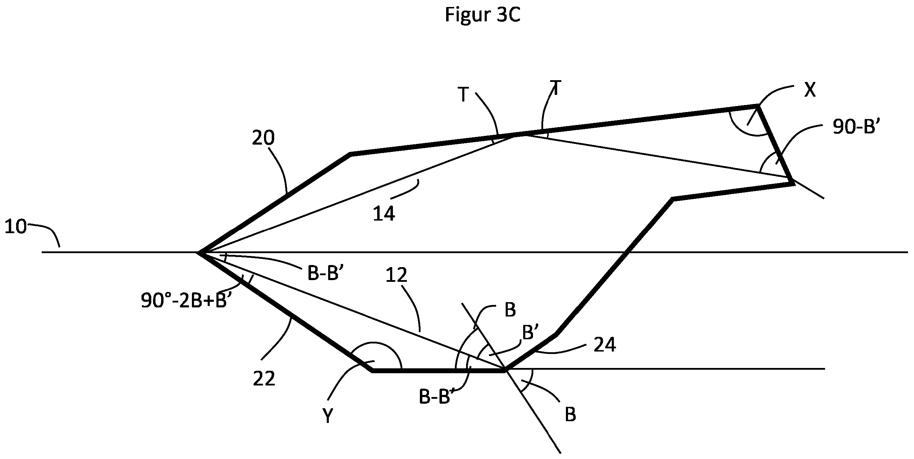

In Figur 3, umfassend Figuren 3A, 3B und 3C, ist noch eine weitere Ausführungsform der Vorrichtung 100 zur Strahlformung gezeigt.

Analog zu Figur 2 wird der einfallende, p-polarisierte Laserstrahl 1 beim Auftreffen auf das Prisma 2 in eine erste Strahlhälfte 12 und eine zweite Strahlhälfte 14 zerlegt. Der Strahlengang der ersten Strahlhälfte 12 ist dabei identisch mit dem aus Figur 2.

Der Strahlengang der zweiten Strahlhälfte 14 unterscheidet sich jedoch von dem aus Figur 2. Die zweite Strahlhälfte 14 wird zwar nach dem Eintritt in das Prisma 2 auch in Richtung der Prismenbasis 28 gebrochen. Jedoch verläuft die Prismenbasis 28 nicht parallel zum einfallenden Laserstrahl 10, da der Prismenwinkel P größer als im vorherigen Beispiel ist.

Jedoch erfährt die zweite Strahlhälfte 14 auch in diesem Ausführungsbeispiel an der Prismenbasis 28 eine Totalreflexion, da der Winkel der Reflexion T auf der Prismenbasis 28 kleiner als in der Ausführungsform der Figur 2 ist und daher die Bedingung für die Totalreflexion weiterhin erfüllt ist. Da die zweite Strahlhälfte 14 jedoch auch unter der Brewster-Bedingung aus dem Prisma 2 treten soll, ist der Prismenwinkel X, den die erste Austrittsfläche 26 mit der Prismenbasis 28 einschließt im Vergleich zu der Ausführung der Figur 2 vergrößert.

Die zweite Strahlhälfte 14 verlässt das Prisma 2 unter dem Brewster-Winkel B und trifft auf einen ersten Spiegel 5, der die zweite Strahlhälfte 14 in Richtung eines Polarisationsdrehers 3 reflektiert. Dort wird die Polarisationsrichtung der zweiten Strahlhälfte 14 in eine s-Polarisation umgewandelt. Nach dem Polarisationsdreher 3 wird die zweite Strahlhälfte 14 von einem weiteren Spiegel 5 in Richtung des Dünnfilmpolarisators 4 reflektiert. Die erste Strahlhälfte 12 wird dort durch den Dünnfilmpolarisator 4 transmittiert und die zweite Strahlhälfte 14 wird aufgrund ihrer s-Polarisation vollständig vom Dünnfilmpolarisator reflektiert.

Analog zu den vorherigen Ausführungsformen werden die beiden Strahlhälfte 12, 14 dadurch vorzugsweise deckungsgleich überlagert, so dass das Strahlprofil 18 des resultierenden Strahls 16 kleiner als das Strahlprofil 10 des einfallenden Laserstrahls 1 ist.

Aus Figur 3B ergeben sich diverse Winkelzusammenhänge, die für diese Ausführungsform von Bedeutung sind. Gezeigt ist aus Gründen der Übersichtlichkeit nur die untere Strahlbegrenzung der zweiten Stahlhälfte 14.

Ausgangspunkt der Darstellung ist dabei der einfallende Laserstrahl 1, der die Horizontale vorgibt, von der aus die Winkel im System angegeben werden. In der Ausführungsform sind die erste Einfallseite 20 und die zweite Einfallseite 22 in einem Winkel von 90°-B zum einfallenden Laserstrahl 1 angeordnet.

Die zweite Strahlhälfte 14 trifft unter dem Brewster-Winkel B relativ zur Flächennormalen auf die zweite Einfallseite 22 und wird unter dem Winkel B' zur Flächennormalen hin gebrochen. Im Prisma 2 verläuft die zweite Strahlhälfte 14 unter einem Winkel von B-B' relativ zur Horizontalen und wird schließlich an der Prismenbasis 28 unter dem Winkel T totalreflektiert.

Der Winkel T ergibt sich aus dem Öffnungswinkel des Prismas 90°-B, dem Prismenwinkel P und dem Winkel der zweiten Strahlhälfte 14 zur Horizontalen über die Beziehung: 360° = [90°-B]+[P]+[T]+[180°-(B-B')] und somit T = 90°+2B-B'-P.

In der vorherigen Gleichung wurden die relevanten Winkel des Systems in eckigen Klammern zusammengefasst. Insbesondere muss T kleiner als der Winkel der Totalreflexion sein, so dass die zweite Strahlhälfte 14 an der Prismenbasis 28 total reflektiert wird. Jedoch ist zu beachten, dass ein flacherer Auftreffwinkel als der Winkel der Totalreflexion ebenfalls zu einer Totalreflexion führt, so dass der Winkel der Totalreflexion, der sich aus den Brechungsindizes des Prismas 2 und des umgebenden Mediums ergibt, nur als obere Grenze angesehen werden darf.

In Figur 3C sind weitere Winkelrelationen des Prismas 2 gezeigt, wobei aus Gründen der Übersichtlichkeit nur die obere Strahlgrenze der zweiten Strahlhälfte 14 gezeigt wird. Da die zweite Strahlhälfte 14 unter dem Winkel B' auf die zweite Austrittsfläche 26 treffen soll, ergibt sich der Prismenwinkel X über die Beziehung: 180° = [T]+[X]+[90°-B']. Da der Winkel der Reflexion T wie oben gezeigt vom Prismenwinkel P abhängt, ergibt sich insgesamt für den Prismenwinkel X folgende Beziehung: X=P-2B.

Werden die obengenannten Winkelrelationen eingehalten, so trifft die zweite Strahlhälfte 14 unter dem Brewster-Winkel B auf die zweite Prismenseite 22 und tritt auch unter dem Brewster-Winkel B aus der zweiten Austrittsfläche 26. Des Weiteren ergeben sich aus dem Winkelbeziehungen auch die geometrischen Außenabmessungen des Prismas 2.

Die erste Strahlhälfte 12 ist auch in Figur 3C gezeigt, jedoch aus Gründen der Übersichtlichkeit nur deren untere Strahlbegrenzung. Die erste Strahlhälfte 12 nimmt mit der zweiten Prismenseite 22 den Winkel 90°-2B+B' ein. Da die erste Strahlhälfte 12 wieder unter dem Winkel B' auf die erste Austrittsseite 24 treffen soll, ergibt sich der Prismenwinkel Y über die Relation 180° = [90°-2B+B']+[Y]+[B-B'] und somit Y = 90°+B.

Der Winkel des Dünnschichtpolarisators ist bei zusätzlichen Umlenkspiegeln bevorzugt unabhängig von der Ausgestaltung des Prismas. Insbesondere kann der Dünnschichtpolarisator so angeordnet sein, dass der reflektierte Strahl mit s-Polarisation mit dem Strahl der p-Polarisation überlagert ist.

Die Polarisationseigenschaften des Dünnschichtpolarisators sind insbesondere durch den Dünnschichtstapel vorgegeben, der sich auf unterschiedliche Einfallswinkel optimieren lässt. Daher kann der p-polarisierte Strahl auch, in Abhängigkeit von der Ausgestaltung des Dünnschichtpolarisators, unter einem anderen Winkel als dem Brewster-Winkel zu dem Dünnschichtpolarisator stehen.

Die Winkelbeziehungen sind auch direkt auf die in Figur 2 gezeigte Ausbildungsform anwendbar.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: einfallender Laserstrahl
- 10: Strahlquerschnitt des einfallenden Laserstrahls
- 12: erste Strahlhälfte
- 14: zweite Strahlhälfte
- 16: resultierender Strahl
- 18: Strahlquerschnitt des resultierenden Strahls
- 2: Prisma
- 20: erste Einfallsseite
- 22: zweite Einfallsseite
- 24: erste Austrittsseite
- 26: zweite Austrittsseite
- 28: Prismenbasis
- 3: Polarisationsdreher
- 4: Dünnschichtpolarisator
- 5: Spiegel
- X, P, Y: Prismenwinkel
- T: Winkel der Reflexion

## Patentansprüche

1. Vorrichtung (100) zur Strahlformung eines Laserstrahls (1), umfassend ein Prisma (2), einen Polarisationsdreher (3) und einen Dünnschichtpolarisator (4),
wobei das Prisma (2) so angeordnet ist, dass es einen einfallenden Laserstrahl (1) in eine erste Strahlhälfte (12) und eine zweite Strahlhälfte (14) aufteilt, wobei zumindest die erste Strahlhälfte (12) in das Prisma (2) eingekoppelt wird;
wobei die erste Strahlhälfte (12) an einer ersten Einfallseite (20) in das Prisma (2) eintritt, wobei das Prisma (2) so ausgebildet ist, dass die erste Einfallseite (20) unter dem Brewster-Winkel (B) gegenüber dem einfallenden Laserstrahl (1) angeordnet ist, und
wobei das Prisma (2) so ausgebildet ist, dass die in das Prisma (2) eingekoppelte erste Strahlhälfte (12) an einer Austrittsseite (24) des Prismas (2) wieder aus dem Prisma (2) ausgekoppelt wird, wobei die erste Strahlhälfte (12) unter dem Brewster-Winkel aus dem Prisma (2) ausgekoppelt wird, wobei der Dünnschichtpolarisator (4) so angeordnet ist, dass er von der aus dem Prisma (2) ausgekoppelten ersten Strahlhälfte (12) durchlaufen wird.
wobei der Polarisationsdreher (3) so angeordnet ist, dass er von der zweiten Strahlhälfte (14) durchlaufen wird und die Polarisation der zweiten Strahlhälfte (14) dreht; und
wobei die zweite Strahlhälfte (14) so geführt ist, dass sie von dem Dünnschichtpolarisator (4) reflektiert wird und der Dünnschichtpolarisator (4) die erste Strahlhälfte (12) und die zweite Strahlhälfte (14) überlagert.

2. Vorrichtung nach Anspruch 1, **dadurch gekennzeichnet, dass** die erste Austrittsseite (24) unter dem Brewster-Winkel (B') zu der in das Prisma (2) eingekoppelten, auf die erste Austrittsseite (24) auftreffenden ersten Strahlhälfte (12) steht;
wobei der Dünnschichtpolarisator (4) so angeordnet ist, dass er von der aus dem Prisma (2) ausgekoppelten ersten Strahlhälfte (12) unter dem Brewster-Winkel (B) durchlaufen wird.

3. Vorrichtung (100) nach Anspruch 1 oder 2, **dadurch gekennzeichnet, dass** der einfallende Laserstrahl (1) durch geeignete Mittel in einen p-polarisierten Zustand überführt wird.

4. Vorrichtung (100) nach einem der Ansprüche 1 bis 3, **dadurch gekennzeichnet, dass** der Polarisationsdreher (3) am Prisma (2) angebracht ist und/oder dass der Polarisationsdreher (3) eine λ/2 Platte ist.

5. Vorrichtung (100) nach einem der vorstehenden Ansprüche, **dadurch gekennzeichnet, dass** der Polarisationsdreher (3) so ausgebildet ist, dass die Polarisation der zweiten Strahlhälfte (14) um 90° gedreht wird, bevorzugt in eine s-Polarisation gedreht wird.

6. Vorrichtung nach einem der vorstehenden Ansprüche, **dadurch gekennzeichnet, dass** das Prisma (2) so ausgebildet ist, dass mindestens eine der Strahlhälften (14) im Prisma (2) totalreflektiert wird.

7. Vorrichtung nach einem der vorstehenden Ansprüche, **dadurch gekennzeichnet, dass** mindestens ein Spiegel (5) vorgesehen ist, welcher die zweite Strahlhälfte (14) nach dem Durchtreten des Polarisationsdrehers (3) auf den Dünnschichtpolarisator (4) reflektiert.

8. Vorrichtung nach Anspruch 7, **dadurch gekennzeichnet, dass** der oder die Spiegel (5) und das Prisma (2) auf einer gemeinsamen Grundplatte vormontiert sind.

9. Vorrichtung nach einem der vorstehenden Ansprüche, **dadurch gekennzeichnet, dass** das Prisma (2) so angeordnet und ausgebildet ist, dass die zweite Strahlhälfte (14) an einer zweiten Einfallseite (22) in das Prisma (2) eingekoppelt wird, wobei die zweite Einfallseite (22) unter dem Brewster-Winkel (B) gegenüber dem einfallenden Laserstrahl (1) angeordnet ist.

10. Vorrichtung nach Anspruch 9, **dadurch gekennzeichnet, dass** das Prisma (2) so ausgebildet ist, dass die zweite Strahlhälfte (14) an einer zweiten Austrittsseite (26) aus dem Prisma (2) ausgekoppelt wird, wobei die zweite Austrittsseite (26) so angeordnet ist, dass die zweite Strahlhälfte (14) unter dem Brewster-Winkel auf die zweiten Austrittsseite (26) auftrifft.

11. Vorrichtung nach Anspruch 10, **dadurch gekennzeichnet, dass** der Polarisationsdreher (3) so angeordnet ist, dass die aus dem Prisma (2) ausgekoppelte zweite Strahlhälfte (14) den Polarisationsdreher (3) durchläuft.

12. Vorrichtung nach einem der Ansprüche 1 bis 8, **dadurch gekennzeichnet, dass** die zweite Strahlhälfte (14) nicht in das Prisma (2) eintritt.

13. Vorrichtung nach Anspruch 12 **dadurch gekennzeichnet, dass** ein Dünnschichtpolarisator (4) auf der ersten Austrittsseite (24) des Prismas (2) durch eine geeignete optische Beschichtung realisiert wird.

14. Vorrichtung nach Anspruch 12 **dadurch gekennzeichnet, dass** das Prisma (2) ein Dove-Prisma ist.

15. Verfahren zur Strahlformung eines Laserstrahls (1) mittels einer Vorrichtung (100), wobei die Vorrichtung (100) ein Prisma (2), einen Polarisationsdreher (3) und einen Dünnschichtpolarisator (4) umfasst, wobei der einfallende Laserstrahl (10) durch Auftreffen auf das Prisma (2) in eine erste Strahlhälfte (12) und eine zweite Strahlhälfte (14) geteilt wird; **dadurch gekennzeichnet, dass**
die erste Strahlhälfte (14) unter dem Brewster-Winkel auf eine erste Eintrittsseite (20) des Prismas (2) trifft, in das Prisma eintritt (2), das Prisma (2) durchläuft, unter dem Brewster-Winkel aus dem Prisma (2) austritt;die erste Strahlhälfte (12) nach dem Durchlauf durch das Prisma (2) einen Parallelversatz zum einfallenden Laserstrahl (10) aufweist;
die erste Strahlhälfte (12) nach dem Austritt aus dem Prisma (2) einen Dünnschichtpolarisator (4) durchläuft;
die zweite Strahlhälfte (14) mit dem Polarisationsdreher (3) in der Polarisation gedreht wird; die zweite Strahlhälfte (14) durch Brechung und/oder Reflexion in Richtung des Dünnschichtpolarisators (4) abgelenkt wird;
die zweite Strahlhälfte (14) vom Dünnschichtpolarisator (4) reflektiert wird; und
die erste Strahlhälfte (12) und die zweite Strahlhälfte (14) in Strahlrichtung nach dem Dünnschichtpolarisator (4) deckungsgleich überlagert werden.

## Claims

1. An apparatus (100) for beam shaping a laser beam (1), comprising a prism (2), a polarization rotator (3) and a thin-film polarizer (4),
wherein the prism (2) is arranged such that it splits an incident laser beam (1) into a first beam half (12) and a second beam half (14), wherein at least the first beam half (12) is coupled into the prism (2);
wherein the first beam half (12) enters the prism (2) at a first incident side (20), wherein the prism (2) is designed such that the first incident side (20) is arranged under the Brewster angle (B) relative to the incident laser beam (1), and
wherein the prism (2) is designed such that the first beam half (12) coupled into the prism (2) is coupled out of the prism (2) again at an exit side (24) of the prism (2), wherein the first beam half (12) is coupled out of the prism (2) under the Brewster angle, wherein the thin-film polarizer (4) is arranged such that it is traversed by the first beam half (12) coupled out of the prism (2);
wherein the polarization rotator (3) is arranged such that it is traversed by the second beam half (14) and rotates the polarization of the second beam half (14); and
wherein the second beam half (14) is guided so that it is reflected by the thin-film polarizer (4) and the thin-film polarizer (4) superimposes the first beam half (12) and the second beam half (14).

2. The apparatus according to claim 1, **characterized in that** the first exit side (24) is under the Brewster angle (B') to the first beam half (12) coupled into the prism (2) and incident on the first exit side (24);
wherein the thin-film polarizer (4) is arranged such that it is traversed by the first beam half (12) coupled out of the prism (2) under the Brewster angle (B).

3. The apparatus (100) according to claim 1 or 2, **characterized in that** the incident laser beam (1) is transformed into a p-polarized state by suitable means.

4. The apparatus (100) according to any one of claims 1 to 3, **characterized in that** the polarization rotator (3) is mounted on the prism (2) and/or **in that** the polarization rotator (3) is a λ /2 plate.

5. The apparatus (100) according to one of the preceding claims, **characterized in that** the polarization rotator (3) is designed such that the polarization of the second beam half (14) is rotated by 90°, preferably into an s-polarization.

6. The apparatus according to one of the preceding claims, **characterized in that** the prism (2) is designed such that at least one of the beam halves (14) is totally reflected in the prism (2).

7. The apparatus according to one of the preceding claims, **characterized in that** at least one mirror (5) is provided which reflects the second beam half (14) onto the thin-film polarizer (4) after it has passed through the polarization rotator (3).

8. The apparatus according to claim 7, **characterized in that** the mirror or mirrors (5) and the prism (2) are pre-mounted on a common base plate.

9. The apparatus according to one of the preceding claims, **characterized in that** the prism (2) is arranged and designed such that the second beam half (14) is coupled into the prism (2) at a second incident side (22), wherein the second incident side (22) is arranged under the Brewster angle (B) relative to the incident laser beam (1).

10. The apparatus according to claim 9, **characterized in that** the prism (2) is designed such that the second beam half (14) is coupled out of the prism (2) at a second exit side (26), wherein the second exit side (26) is arranged such that the second beam half (14) strikes the second exit side (26) under the Brewster angle.

11. The apparatus according to claim 10, **characterized in that** the polarization rotator (3) is arranged such that the second beam half (14) coupled out of the prism (2) passes through the polarization rotator (3).

12. The apparatus according to any one of claims 1 to 8, **characterized in that** the second beam half (14) does not enter the prism (2).

13. The apparatus according to claim 12, **characterized in that** a thin-film polarizer (4) is realized on the first exit side (24) of the prism (2) by means of a suitable optical coating.

14. The apparatus according to claim 12, **characterized in that** the prism (2) is a Dove prism.

15. A method for beam shaping a laser beam (1) by means of an apparatus (100), wherein the apparatus (100) comprises a prism (2), a polarization rotator (3) and a thin-film polarizer (4), wherein
the incident laser beam (10) is split into a first beam half (12) and a second beam half (14) by striking the prism (2); **characterized in that**
the first beam half (14) strikes a first incident side (20) of the prism (2) under the Brewster angle, enters the prism (2), passes through the prism (2), exits the prism (2) under the Brewster angle; the first beam half (12) has a parallel offset to the incident laser beam (10) after passing through the prism (2);
the first beam half (12) passes through a thin-film polarizer (4) after exiting the prism (2);
the second beam half (14) is rotated in polarization with the polarization rotator (3); the second beam half (14) is deflected in the direction of the thin-film polarizer (4) by refraction and/or reflection;
the second beam half (14) is reflected by the thin-film polarizer (4); and
the first beam half (12) and the second beam half (14) are superimposed in the beam direction after the thin-film polarizer (4) so that they are superimposed in a congruent manner.

## Revendications

1. Dispositif (100) de mise en forme d'un faisceau laser (1), comprenant un prisme (2), un rotateur de polarisation (3) et un polariseur à couche mince (4),
dans lequel le prisme (2) est agencé de telle sorte qu'il divise un faisceau laser incident (1) en une première moitié de faisceau (12) et une deuxième moitié de faisceau (14), dans lequel au moins la première moitié de faisceau (12) est couplée dans le prisme (2) ;
dans lequel la première moitié de faisceau (12) pénètre dans le prisme (2) par un premier côté incident (20), dans lequel le prisme (2) est conçu de telle sorte que le premier côté incident (20) est agencé selon l'angle de Brewster (B) par rapport au faisceau laser incident (1), et
dans lequel le prisme (2) est conçu de telle sorte que la première moitié de faisceau (12) couplée dans le prisme (2) est à nouveau couplée hors du prisme (2) à un côté de sortie (24) du prisme (2), dans lequel la première moitié de faisceau (12) est couplée hors du prisme (2) selon l'angle de Brewster, dans lequel le polariseur à couche mince (4) est agencé de telle sorte qu'il est traversé par la première moitié de faisceau (12) couplée hors du prisme (2) ;
dans lequel le rotateur de polarisation (3) est agencé de telle sorte qu'il est traversé par la deuxième moitié de faisceau (14) et fait tourner la polarisation de la deuxième moitié de faisceau (14) ; et
dans lequel la deuxième moitié de faisceau (14) est guidée de telle sorte qu'elle est réfléchie par le polariseur à couche mince (4) et le polariseur à couche mince (4) superpose la première moitié de faisceau (12) et la deuxième moitié de faisceau (14).

2. Dispositif selon la revendication 1, **caractérisé en ce que** le premier côté de sortie (24) est agencé selon l'angle de Brewster (B') par rapport à la première moitié de faisceau (12) couplée dans le prisme (2) et frappant le premier côté de sortie (24) ; dans lequel le polariseur à couche mince (4) est agencé de telle sorte que la première moitié de faisceau (12) couplée hors du prisme (2) le traverse selon l'angle de Brewster (B).

3. Dispositif (100) selon la revendication 1 ou 2, **caractérisé en ce que** le faisceau laser incident (1) est converti dans un état polarisé p par un moyen approprié.

4. Dispositif (100) selon l'une des revendications 1 à 3, **caractérisé en ce que** le rotateur de polarisation (3) est monté sur le prisme (2) et/ou **en ce que** le rotateur de polarisation (3) est une lame λ/2.

5. Dispositif (100) selon l'une des revendications précédentes, **caractérisé en ce que** le rotateur de polarisation (3) est conçu de telle sorte que la polarisation de la deuxième moitié de faisceau (14) est tournée de 90°, de préférence dans une polarisation s.

6. Dispositif selon l'une des revendications précédentes, **caractérisé en ce que** le prisme (2) est conçu de telle sorte qu'au moins une des moitiés de faisceau (14) est totalement réfléchie dans le prisme (2).

7. Dispositif selon l'une des revendications précédentes, **caractérisé en ce qu'au** moins un miroir (5) est pourvu, qui réfléchit la deuxième moitié de faisceau (14) sur le polariseur à couche mince (4) après avoir traversé le rotateur de polarisation (3).

8. Dispositif selon la revendication 7, **caractérisé en ce que** le ou les miroirs (5) et le prisme (2) sont prémontés sur une plaque de base commune.

9. Dispositif selon l'une des revendications précédentes, **caractérisé en ce que** le prisme (2) est agencé et conçu de telle sorte que la deuxième moitié de faisceau (14) est couplée dans le prisme (2) sur un deuxième côté incident (22), dans lequel le deuxième côté incident (22) est agencé selon l'angle de Brewster (B) par rapport au faisceau laser incident (1).

10. Dispositif selon la revendication 9, **caractérisé en ce que** le prisme (2) est conçu de telle sorte que la deuxième moitié de faisceau (14) est couplée hors du prisme (2) sur un deuxième côté de sortie (26), dans lequel le deuxième côté de sortie (26) est agencé de telle sorte que la deuxième moitié de faisceau (14) frappe le deuxième côté de sortie (26) selon l'angle de Brewster.

11. Dispositif selon la revendication 10, **caractérisé en ce que** le rotateur de polarisation (3) est agencé de telle sorte que la deuxième moitié de faisceau (14) couplée hors du prisme (2) traverse le rotateur de polarisation (3).

12. Dispositif selon l'une des revendications 1 à 8, **caractérisé en ce que** la deuxième moitié de faisceau (14) ne pénètre pas dans le prisme (2).

13. Dispositif selon la revendication 12, **caractérisé en ce qu'**un polariseur à couche mince (4) sur le premier côté de sortie (24) du prisme (2) est réalisé par un revêtement optique approprié.

14. Dispositif selon la revendication 12, **caractérisé en ce que** le prisme (2) est un prisme de Dove.

15. Procédé de mise en forme d'un faisceau laser (1) au moyen d'un dispositif (100), dans lequel le dispositif (100) comprend un prisme (2), un rotateur de polarisation (3) et un polariseur à couche mince (4), dans lequel
le faisceau laser incident (10) est divisé en une première moitié de faisceau (12) et une deuxième moitié de faisceau (14) en frappant le prisme (2) ; **caractérisé en ce que**
la première moitié de faisceau (14) frappe un premier côté d'entrée (20) du prisme (2) selon l'angle de Brewster, entre dans le prisme (2), traverse le prisme (2) et sort du prisme (2) selon l'angle de Brewster ; la première moitié de faisceau (12) présente un décalage parallèle au faisceau laser incident (10) après avoir traversé le prisme (2) ;
la première moitié de faisceau (12) traverse un polariseur à couche mince (4) après être sortie du prisme (2) ;
la deuxième moitié de faisceau (14) est tournée en polarisation avec le rotateur de polarisation (3) ;
la deuxième moitié de faisceau (14) est déviée par réfraction et/ou réflexion en direction du polariseur à couche mince (4) ;
la deuxième moitié de faisceau (14) est réfléchie par le polariseur à couche mince (4) ; et
la première moitié de faisceau (12) et la deuxième moitié de faisceau (14) sont superposées de manière congruente dans la direction du faisceau après le polariseur à couche mince (4).
